# EUROPEAN PATENT APPLICATION

(11) **EP 3 401 539 A1**
(43) Date of publication of application: **14.11.2018**
(21) Application number: 18170255.6
(22) Date of filing: 01.05.2018
(51) Int. Cl.: F02M 35/02, F02M 35/022, F02M 35/08, B01D 45/12, B04C 3/06, B04C 5/06, F02M 35/06

(54) **AN AGRICULTURAL VEHICLE AIR CLEANER ASSEMBLY**

(30) Priority: 09.05.2017 EP 17290060
(71) Applicant: AGCO International GmbH, 8212 Neuhausen am Rheinfall (CH)
(72) Inventor: Lecuelle, Jonas, 60026 Beauvais (FR)
(74) Representative: AGCO Intellectual Property Department

(57) **Abstract**

There is described an agricultural vehicle air cleaner assembly having at least one cyclonic generator to enable the removal of suspended particles from an airflow through the air cleaner assembly. The cyclonic generator has at least one vane which acts to generate a cyclone downstream of the generator, where the pitch of the vane is adjustable. By adjusting the pitch of the vane, the cyclones generated by the air cleaner assembly for a given airflow can be adjusted, thereby allowing for dynamic adjustment of the particle removal effect of the air cleaner assembly.

## Description

### Field of the Invention

The present invention relates to an agricultural vehicle air cleaner assembly, and an agricultural vehicle having such an assembly.

### Background of the Invention

Agricultural vehicles regularly operate in environments having relatively high levels of particles suspended in the air, such as during fieldwork or harvesting operations. Accordingly, ambient air which is used as intake air for vehicle engines and other vehicle components must be adequately filtered and cleaned before supply to the engines or other components.

Some agricultural vehicles employ a cyclonic or centrifugal pre-cleaner, which acts to generate a cyclone or vortex in airflow through the pre-cleaner. Due to the centrifugal effect on any relatively heavy particles suspended in the airflow through the pre-cleaner, such particles are forced towards the outside of the airflow. The particles can then be relatively easily removed from the airflow, for example by the use of a debris trap and possibly a low-pressure scavenger air duct. An example of such a system is described in US Patent No. 8,641,792.

However, to ensure that particles are appropriately removed using the pre-cleaner system, the rate of airflow through the pre-cleaner must be sufficient to generate cyclones in the pre-cleaner of a size sufficient to allow for particle removal. As a fan or blower is provided in combination with the pre-cleaner to generate airflow through the pre-cleaner, accordingly the fan or blower must be regulated to ensure adequate airflow.

While the air cleaner assembly may be provided with a dedicated fan or blower, generally such airflow is often provided by a fan or blower having a parallel function on the vehicle, e.g. an engine cooling fan, in an effort to minimise costs. However, this can lead to relatively complicated control schemes and ducting constructions, as the airflow requirements for desired cooling may be different to the airflow requirements for appropriate particle removal.

It is an object of the invention to provide an agricultural vehicle air cleaner assembly which addresses the above issues.

### Summary of the Invention

Accordingly, there is provided an agricultural vehicle air cleaner assembly comprising:
at least one cyclonic generator arranged to generate a cyclonic airflow in air passing through the air cleaner assembly, to facilitate the separation of particles from the airflow,
the at least one cyclonic generator having at least one vane, wherein the pitch of the at least one vane is adjustable to vary the size of the generated cyclonic airflow.

By providing an adjustable pitch air cleaner device, accordingly the cyclone-generating effect of the air cleaner can be varied based on the available airflow through the air cleaner, and/or based on the level of particles passing through the air cleaner, to ensure adequate particle removal from the airflow. It will be understood that such a cyclonic generator air cleaner may also be referred to as a centrifugal dust separator or a vortex-generating air cleaner.

Preferably, the at least one cyclonic generator comprises a central hub portion, wherein the at least one vane extends outwardly from the central hub portion.

It will be understood that, while the vane is adjustable in pitch, the vane is non-rotatable about the central hub portion. The at least one vane is rotationally fixed relative to the central hub portion.

Preferably, the air cleaner assembly comprises an adjustment mechanism coupled with the at least one cyclonic generator, the adjustment mechanism arranged to adjust the pitch of the at least one vane.

The adjustment mechanism may comprise any suitable adjustment system. For example a mechanical linkage, a hydraulic or pneumatic circuit, an electromechanical actuator, etc.

The adjustment mechanism is preferably at least partially housed in the central hub portion of the generator.

Alternatively, the adjustment mechanism can be at least partially arranged about the periphery of the at least one cyclonic generator.

Preferably, the air cleaner assembly comprises a debris trap arranged downstream of the at least one cyclonic generator.

Preferably, the air cleaner assembly is coupled with at least one fan or blower arranged to generate an airflow through the at least one cyclonic generator.

Preferably, the air cleaner assembly comprises a controller arranged to control the pitch adjustment of the at least one vane, wherein the controller controls the pitch adjustment based on the airflow generated by the at least one fan or blower.

Preferably, the air cleaner assembly comprises at least one additional filter arranged downstream of the at least one cyclonic generator.

The at least one additional filter may comprise any suitable filter device, e.g. a filter membrane.

In one embodiment, the air cleaner assembly comprises a single cyclonic generator.

In an alternative embodiment, the air cleaner assembly comprises an array of multiple cyclonic generators.

Preferably, the air cleaner assembly comprises at least one sensor device arranged to detect the levels of suspended particles in airflow through the air cleaner assembly.

Preferably, the air cleaner assembly comprises a controller arranged to control the pitch adjustment of the at least one vane, wherein the controller controls the pitch adjustment based on the detected levels of suspended particles in airflow through the air cleaner assembly.

The at least one sensor device may comprise any suitable detection apparatus, e.g. an optical dust sensor, a particulate matter detector.

It will be understood that the controller arranged to control the pitch adjustment of the vanes may be provided as a dedicated controller device for the air cleaner assembly, or may be provided as part of a general purpose electronics control unit (ECU) for the agricultural machine.

There is further provided an agricultural vehicle, preferably an agricultural tractor, having an air cleaner assembly as described above.

### Detailed Description of the Invention

Embodiments of the invention will now be described, by way of example only, with reference to the accompanying drawings, in which:
Fig. 1 is a side view of an agricultural tractor having an air cleaner assembly according to the invention;
Fig. 2 is a schematic view of an air cleaner assembly according to a first embodiment of the invention;
Fig. 3 is a front plan view of a cyclonic generator of the air cleaner assembly of Fig. 2 in a first configuration;
Fig. 4 is a front plan view of a cyclonic generator of the air cleaner assembly of Fig. 2 in a second configuration; and
Fig. 5 is a schematic view of an intake air filter system according to a second embodiment of the invention.

The drawings are provided by way of reference only, and will be acknowledged as not to scale.

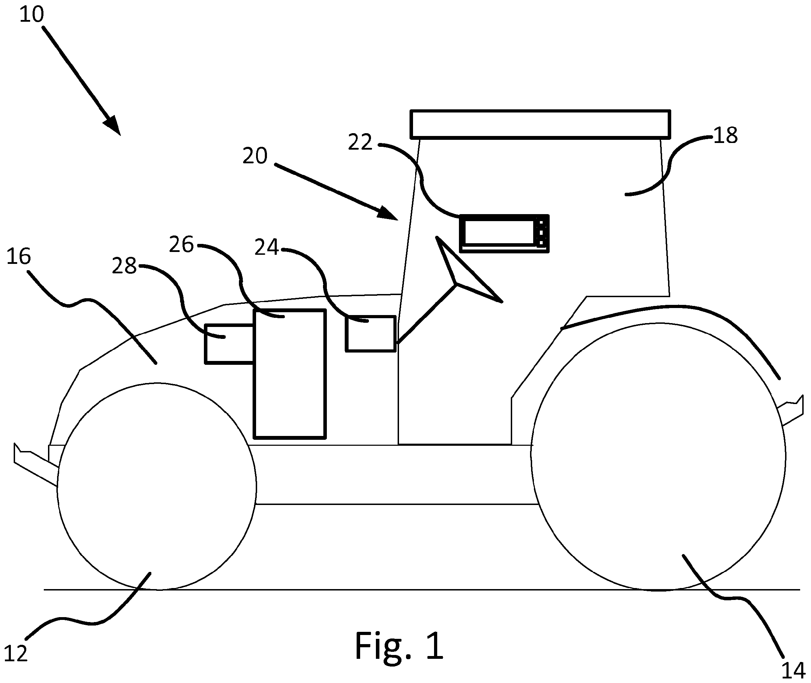

With reference to Fig. 1, an agricultural vehicle according to the invention in the form of an agricultural tractor is indicated at 10. The tractor 10 comprises front wheels 12 and rear wheels 14, a forward engine compartment 16 and a cab section 18. It will be understood that the invention may also be provided in the form of an agricultural harvester, e.g. a combine harvester, or an applicator machine, e.g. a self-propelled sprayer vehicle.

Within the cab 18, an operator station 20 is provided, where the operator can access operator controls including an operator terminal 22. The tractor 10 is provided with at least one electronic control unit (ECU) 24. The ECU 24 is configured to interface with the operator controls 22 and with the various systems and sensors provided about the tractor 10, to provide for monitoring and control of tractor operation. The operator controls 22 and ECU 24 allow the operator to actuate different elements of the tractor 10, e.g. hydraulic circuits, lifting systems, HVAC operation, and/or to control the acceleration and steering of the tractor 10.

It will be understood that the ECU 24 may be provided as a single processing device capable of performing a variety of commands relating to the control of the tractor, or the ECU 24 may be provided as a plurality of different controllers, e.g. a steering controller coupled with the steering system of the tractor, a display controller coupled with the operator terminal 22, etc.

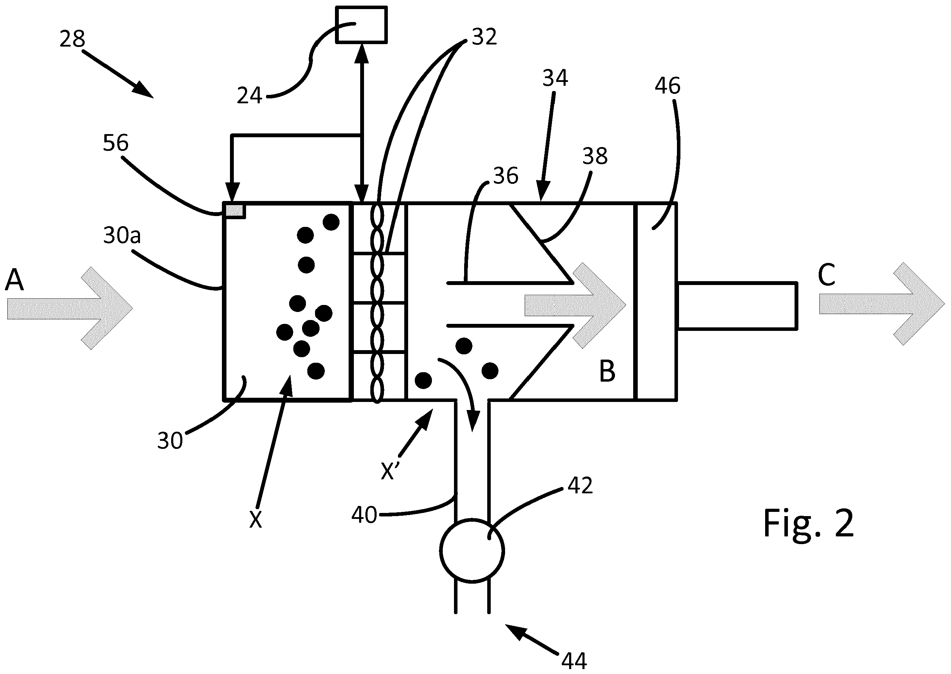

Within the forward engine compartment 16, the tractor comprises an engine 26 and an associated air cleaner assembly 28. With reference to Fig. 2, an overview of an air cleaner assembly 28 according to a first embodiment of the invention is provided.

The air cleaner assembly 28 comprises a housing arranged to receive an intake of atmospheric air, indicated by arrow A. In the illustrated embodiment, the intake airflow A is drawn into a first chamber 30, which has an open face 30a to receive the flow of intake air. The airflow A typically comprises a plurality of suspended particles, e.g. dust, dirt, or other debris, indicated at X.

While the illustrated embodiment comprises an initial chamber 30, it will be understood that other embodiments of air cleaner assembly may be provided without such an initial intake chamber.

The air cleaner assembly 28 comprises an array of cyclonic generators 32 which are configured to impart a swirling action to the incoming air A. The cyclonic generators 32 create cyclones or vortices in the airflow downstream of the generators 32, such that the suspended particles X are forced radially outward due to the centrifugal effect of the twisted airflow. It will be understood that an air cleaner assembly having cyclonic generators may also be referred to as a centrifugal dust separators or vortex-generating air cleaner.

The air cleaner assembly 28 comprises a debris trap 34 formed by at least one central tubular aperture 36 surrounded by a barrier 38, the debris trap 34 arranged downstream of the array of cyclonic generators 32. Accordingly, due to the swirling of the airflow as it passes through the cyclonic generators 32, clean airflow will pass through the central aperture 36 of the debris trap 34, while the outwardly-forced particles X are prevented from passing any further due to the presence of the barrier 38.

The air cleaner assembly 28 is provided with an aspiration duct or scavenger line 40 arranged at the upstream side of the barrier 38. The aspiration duct 40 is generally configured to have a suction effect, such that any particles X separated from the airflow by the debris trap 34 are extracted from the air cleaner assembly 28 via the aspiration duct 40, as indicated at X'. The aspiration duct 40 may be connected with a blower or a fan 42 provided on the tractor 10 to generate the suction effect in the duct 40. The fan 42 may be a dedicated aspiration duct fan, or may be a multi-purpose fan used for other aspects of the tractor 10, e.g. a vehicle cooling fan. The collected particles X' can then be ejected from the tractor 10 at a suitable exhaust location, as indicated at 44.

Downstream of the debris trap 34, the cleaned airflow, indicated by arrow B, passes through an additional filter 46 to provide for additional cleaning of the airflow B. The cleaned airflow C is then suitable for provision to the air intake of the tractor engine 26, or for any other tractor component.

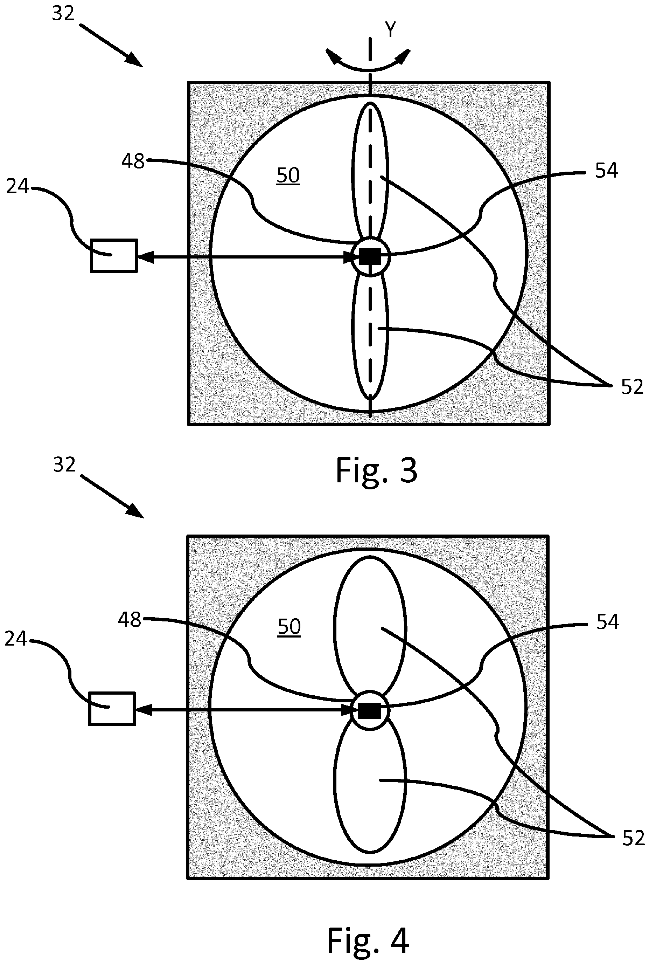

An enlarged front plan view of a cyclonic generator 32 of the air cleaner assembly 28 is provided in Fig. 3. The cyclonic generator 32 comprises a central hub portion 48 arranged in a through-going opening 50, the hub portion 48 having a pair of blades or vanes 52 extending therefrom towards the outer periphery of the opening 50. The vanes 52 are configured to impart a swirling movement to airflow passing through the opening 50, with the result that cyclonic airflow patterns are created downstream of the generator 32.

The cyclonic generator 32 is arranged such that the pitch of the vanes 52 is adjustable on the hub portion 48, to provide for different cyclonic generator 32 profiles. The vanes 52 can be pitched about the axis indicated at Y in Fig. 4. The air cleaner assembly 28 comprises at least one adjustment mechanism 54 which is configured to adjust the pitch of the vanes 52. The adjustment mechanism 54 is preferably provided in the hub portion 48 of the cyclonic generator 32, and may comprise any suitable mechanism for the adjustment of the pitch of the supported vanes 52, e.g. a mechanical linkage, a hydraulic or pneumatic circuit, an electromechanical actuator, etc. The adjustment mechanism 54 is coupled with the vanes 52 using any suitable connection, e.g. via a central rod or pin extending into the interior of the vanes 52. Additionally or alternatively, the adjustment mechanism 54 can be at least partially arranged about the periphery of the through-going opening 50, coupled with the contained vanes 52.

By appropriate control of the adjustment mechanism 54, the pitch of the vanes 52 of the cyclonic generator 32 can be varied to present a different aerodynamic profile to airflow through the generator 32. By pitch, it will be understood as the angle α which the vanes 52 make with the incoming airflow through the generator 32. Accordingly, the size of any cyclones or vortices created by the flow of air through the generator 32 can be dynamically varied, based on the appropriate pitch of the vanes 52.

An example of a cyclonic generator 32 provided n a second configuration is illustrated in Fig. 4, wherein the vanes 52 are pitched to present a larger surface area to incoming airflow. By increasing the pitch of the vanes 52, the size of the cyclones created downstream of the generator 32 will increase for a given airflow.

The adjustment mechanism 54 is controlled by the ECU 24, which is arranged to vary the pitch of the vanes 52 based on the current requirements or operating conditions of the air cleaner assembly 28. With reference to Fig. 2, the ECU 24 is preferably coupled with at least one sensor device 56, which provides sensor data used to control the pitch of the vanes 52. In the embodiment of Fig. 2, the sensor 56 may comprise a dust or particle sensor, arranged to detect the levels of particles or other debris X which are suspended in the intake airflow A. Accordingly, the ECU 24 can adjust the pitch of the vanes 52 to ensure that the dust removal effect of the air cleaner assembly 28 is optimised. When increased dust levels are detected, the ECU 24 will adjust the vanes 52 to increase vane pitch, thereby increasing the levels of cyclonic airflow downstream of the generators 32.

Additionally or alternatively, the pitch of the vanes 52 can be controlled based on the airflow rate through the air cleaner assembly 28. Such control may be performed by monitoring the flow rate of the fan 42, and/or by monitoring the output of suitable pressure sensors or flow rate sensors provided as part of the air cleaner assembly 28. When the ECU 24 determines that the flow rate is decreasing, the ECU 24 will adjust the vanes 52 to increase vane pitch, thereby maintaining the level of cyclonic airflow downstream of the generators 32 when the airflow rate decreases.

It will be understood that the ECU 24 may be provided as part of a general purpose electronics control unit for the vehicle, or the ECU 24 may be provided as a dedicated controller for the air cleaner assembly 28.

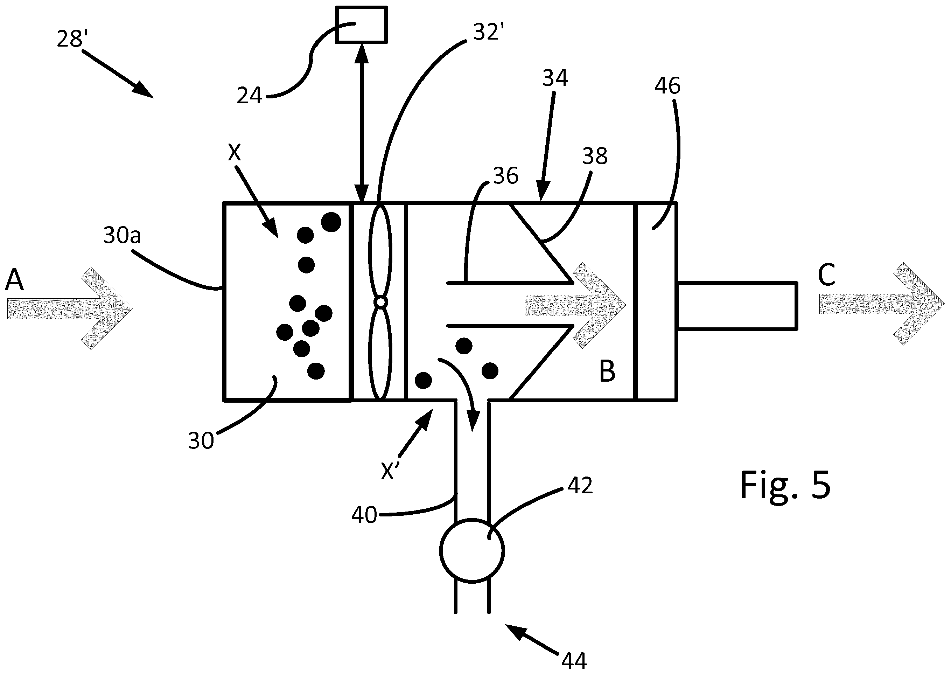

In the embodiment of Fig. 2, it will be understood that the air cleaner assembly 28 is provided with a plurality of cyclonic generators 32, which may be arranged in an x-by-y array as appropriate. It will be understood that other configurations of cyclonic generators 32 may be provided. With reference to Fig. 5, a further embodiment of an air cleaner assembly according to the invention is indicated at 28', wherein the assembly is provided with a single cyclonic generator 32' having vanes of adjustable pitch, as described above.

While the illustrated embodiments describe cyclonic generators 32,32' having two vanes 52, it will be understood that air cleaner assemblies according to the invention may be provided with cyclonic generators having any number of vanes.

As a result of providing an air cleaner assembly 28,28' with cyclonic generators 32 having adjustable pitch vanes 52, accordingly the operation of the air cleaner assembly 28,28' can be dynamically adjusted based on the operating conditions of the agricultural vehicle, e.g. when the level of suspended dust particles in intake airflow suddenly rises. In addition, such dynamic adjustment can be performed without additional need for relatively complicated fan control schemes, and can be varied based on the airflow rate through the air cleaner assembly.

The invention is not limited to the embodiments described herein, and may be modified or adapted without departing from the scope of the present invention.

## Claims

1. An agricultural vehicle air cleaner assembly comprising:
at least one cyclonic generator arranged to generate a cyclonic airflow in air passing through the air cleaner assembly, to facilitate the separation of particles from the airflow,
the at least one cyclonic generator having at least one vane, wherein the pitch of the at least one vane is adjustable to vary the size of the generated cyclonic airflow.

2. The air cleaner assembly of claim 1, wherein the at least one cyclonic generator comprises a central hub portion, wherein the at least one vane extends outwardly from the central hub portion.

3. The air cleaner assembly of claim 1 or claim 2, wherein the air cleaner assembly comprises an adjustment mechanism coupled with the at least one cyclonic generator, the adjustment mechanism arranged to adjust the pitch of the at least one vane.

4. The air cleaner assembly of claim 3 when dependent on claim 2, wherein the adjustment mechanism is at least partially housed in the central hub portion of the generator.

5. The air cleaner assembly of claim 3 when dependent on claim 2, wherein the adjustment mechanism is at least partially arranged about the periphery of the at least one cyclonic generator.

6. The air cleaner assembly of any one of claims 1-5, wherein the air cleaner assembly comprises a debris trap arranged downstream of the at least one cyclonic generator.

7. The air cleaner assembly of any one of claims 1-6, wherein the air cleaner assembly is coupled with at least one fan or blower arranged to generate an airflow through the at least one cyclonic generator.

8. The air cleaner assembly of claim 7, wherein the air cleaner assembly comprises a controller arranged to control the pitch adjustment of the at least one vane, wherein the controller controls the pitch adjustment based on the airflow generated by the at least one fan or blower.

9. The air cleaner assembly of any one of claims 1-8, wherein the air cleaner assembly comprises at least one additional filter arranged downstream of the at least one cyclonic generator.

10. The air cleaner assembly of any one of claims 1-9, wherein the air cleaner assembly comprises at least one sensor device arranged to detect the levels of suspended particles in airflow through the air cleaner assembly.

11. The air cleaner assembly of claim 10, wherein the air cleaner assembly comprises a controller arranged to control the pitch adjustment of the at least one vane, wherein the controller controls the pitch adjustment based on the detected levels of suspended particles in airflow through the air cleaner assembly.

12. The air cleaner assembly of claim 10 or claim 11, wherein the at least one sensor device comprises an optical dust sensor.

13. The air cleaner assembly of any one of claims 1-12, wherein the air cleaner assembly comprises a single cyclonic generator.

14. The air cleaner assembly of any one of claims 1-12, wherein the air cleaner assembly comprises an array of multiple cyclonic generators.

15. An agricultural vehicle, preferably an agricultural tractor, having an air cleaner assembly as claimed in any one of claims 1-14.
